# EUROPEAN PATENT APPLICATION

(11) **EP 4 570 871 A1**
(43) Date of publication of application: **18.06.2025**
(21) Application number: 23307189.3
(22) Date of filing: 13.12.2023
(51) Int. Cl.: C09D 11/17, C09D 11/18, B82Y 40/00

(54) **PLASMONIC INK WITH CORE-SHELL METAL NANOPARTICLES**

(71) Applicant: Société BIC, 92110 Clichy (FR); Université de Haute Alsace, 68200 Mulhouse (FR); Centre National de la Recherche Scientifique Alsace, 75016 Strasbourg (FR)
(72) Inventor: CAFFIER, Guillaume, 92110 Clichy (FR); GHELLAL, Feriel, 90000 BELFORT (FR); MOUGIN, Karine, 68210 VALDIEU-LUTRAN (FR); SPANGENBERG, Arnaud, 68720 FLAXLANDEN (FR); VAN NGOC TRAN, Ninh, 68200 Mulhouse (FR)
(74) Representative: BIC

(57) **Abstract**

The present invention relates to a process for preparing an aqueous suspension of core-shell metal nanoparticles which essentially consist of metal, wherein the core of said nanoparticles comprises at least one of silver or copper and the shell of said nanoparticles comprises at least one of the other of silver or copper, wherein the metal nanoparticles are prepared by mixing at least one silver salt, at least one copper salt, a dispersing agent, ascorbic acid, an alkali base, and water, wherein the ratio of copper ions of the copper salt to silver ions of the silver salt is equal to or higher than 4. The present invention further relates to an aqueous suspension of core-shell metal nanoparticles, a process for preparing an aqueous gel ink, and to an aqueous gel ink comprising core-shell metal nanoparticles.

## Description

### Technical Field:

The present disclosure relates to a process for preparing an aqueous suspension and an aqueous gel ink comprising core-shell metal nanoparticles. In addition, the present disclosure relates to an aqueous suspension and an aqueous gel ink comprising core-shell metal nanoparticles.

### Technical Background:

Writing instruments such as ballpoint pens comprise inks to produce images, texts or designs. The inks typically comprise pigments or dyes as colorants. However, the production of pigments and dyes, as well as the inadequate disposal of dyes and pigments may be harmful to the environment. Very recently plasmonic nanoparticles have emerged as an alternative colorant for writing instrument inks.

Inks comprising plasmonic nanoparticles may be referred to as plasmonic ink compositions.

On the one hand, the color and intensity (vividness) of aqueous plasmonic ink compositions may be controlled by adjusting the particle size of the plasmonic nanoparticles. The *"vividness"* should be understood as the intensity when applied on a support, in particular on a porous support, i.e. an absorbing support or a synthetic paper. For example, a first ink comprising gold nanoparticles of smaller particle size may show a color closer to blue compared to a second ink comprising gold nanoparticles of a greater particle size, which may show a color closer to red.

On the other hand, the color and intensity (vividness) of the aqueous plasmonic ink compositions may be controlled by adjusting the structure of the metal nanoparticles. Indeed, plasmonic ink compositions may be formulated with metal nanoparticles consisting of a single metal. For example, metal nanoparticles consisting of a single metal (for example only silver, gold or copper) may have a plasmonic spectrum with well-defined peaks, but their absorption efficiency is limited and they tend to scatter light. This may have a negative impact on the vividness/intensity of the color of the ink composition. While it may be possible to improve the vividness or intensity of the ink composition by increasing the concentration of the metal nanoparticles in the ink or by adjusting their structure, such modifications/adjustments can be difficult, time-consuming and expensive (in particular since the plasmonic nanoparticles may agglomerate in case their concentration is increased). Therefore, it may be quite challenging to obtain plasmonic inks which provide a vivid and intense color.

In addition, recently, concerns have emerged regarding the content of silver metal in a consumer product and future regulations may require maintaining the amount of silver metal in a consumer product below a threshold. Thus, it is desirable to reduce the content of silver in an ink composition, notably in a plasmonic ink composition, while maintaining a satisfying intensity of the written mark when applied on a support.

Therefore, there is still a need for providing a plasmonic ink composition presenting an improved writing performance in terms of vividness and safety, that is produced in a simple and cost-effective manner.

### Summary of the Invention:

It is a first object of the present disclosure to provide a process for preparing an aqueous suspension of core-shell metal nanoparticles which essentially consist of metal, wherein the core of said nanoparticles comprises at least one of silver or copper and the shell of said nanoparticles comprises at least one of the other of silver or copper, wherein the metal nanoparticles are prepared by mixing:
- at least one silver salt,
- at least one copper salt,
- a dispersing agent,
- ascorbic acid,
- an alkali base,
- water,
wherein the weight ratio of metallic copper to metallic silver is equal to or higher than 4, more preferably equal to or higher than 6.

According to some embodiments, the weight ratio of metallic copper to metallic silver is from 6 to 20, more specifically from 6 to 15, and in particular from 6 to 12.

According to some embodiments, the core of the metal nanoparticles comprises silver and the shell of the metal nanoparticles comprises copper.

According to some embodiments, the core of the metal nanoparticles essentially consists or consists of silver and the shell of the metal nanoparticles essentially consists or consists of copper.

According to some embodiments, the silver salt is chosen from AgNO₃, AgClO₄, Ag₂SO₄, AgCl, AgBr, AgOH, Ag₂O, AgBF₄, AglO₃, AgPF₆ and mixtures thereof, more specifically the silver salt is silver nitrate AgNO₃.

According to some embodiments, the copper salt is a copper (II) salt.

According to some embodiments, the copper (II) salt is chosen from CuSO₄, CuCl₂, CuO, Cu(NO₃)₂, CuF₂, CuBr₂, CuCO₃, Cu(OAc)₂, Cu(ClO₃)₂, Cu(N₃)₂, Cu₂(CO₃)₂(OH)₂, Cu(OH)₂, and mixtures thereof, even more specifically the copper salt is copper sulfate CuSO₄.

According to some embodiments, the silver salt (more specifically the silver nitrate) is added at an amount from 0.01 to 2 weight%, more specifically from 0.05 to 1.5 weight%, more specifically from 0.05 to 1 weight%, and in particular from 0.05 to 0.5 weight%, based on the total weight of the aqueous suspension.

According to some embodiments, the copper salt (more specifically the copper sulfate) is added at an amount from 0.5 to 15 weight%, more specifically from 1 to 10 weight%, more specifically from 1 to 5 weight%, and in particular from 1 to 4 weight%, based on the total weight of the aqueous suspension.

According to some embodiments, the dispersing agent is present at an amount from 0.1 to 1.1 weight%, more specifically from 0.15 to 1.0 weight%, more specifically from 0.2 to 0.8 weight%, and in particular from 0.25 to 0.4 weight%, based on the total weight of the aqueous suspension.

According to some embodiments, the dispersing agent comprises homopolymers or copolymers of vinylpyrrolidone, more specifically polyvinylpyrrolidone.

According to some embodiments, the ascorbic acid is present at an amount from 1 to 10 weight%, more specifically from 2 to 8 weight%, and in particular from 3 to 7 weight%, based on the total weight of the aqueous suspension.

According to some embodiments, the alkali base is chosen from metallic oxides and/or metallic hydroxides, more specifically chosen from Na₂O, K₂O, CS₂O, CaO, BaO, NaOH, KOH, CsOH, Ca(OH)₂, Ba(OH)₂, and mixtures thereof, and in particular the alkali base is sodium hydroxide NaOH.

According to some embodiments, the alkali base is added at an amount from 0.5 to 30 weight%, more specifically from 1 to 20 weight%, and in particular from 2 to 10 weight%, based on the total weight of the aqueous suspension.

According to some embodiments, the process is carried out at a temperature from 0 to 100°C, more specifically from 5 to 80°C, more specifically from 20 to 80°C, more specifically from 50 to 68°C, more specifically from 53 to 65 °C, and even more specifically from 55 to 63°C.

According to some embodiments, the process comprises a step of preparing a first mixture comprising water, the silver salt and the copper salt, and then adding to that first mixture a second mixture comprising the ascorbic acid, more specifically wherein the first mixture has a pH of from 5 to 9 and more specifically from 6 to 8.

According to some embodiments, the process comprises a step of:
(i) preparing a first mixture comprising the silver salt, the copper salt, the dispersing agent, alkali base, and water,
(ii) preparing a second mixture comprising the ascorbic acid, alkali base, and water, and
(iii) mixing the first mixture with the second mixture to form the aqueous suspension.

According to some embodiments, the first mixture has a pH from 5 to 9, and more specifically from 6 to 8.

According to some embodiments, the second mixture has a pH from 5 to 9, and more specifically from 6 to 8.

According to some embodiments, the step of mixing the first mixture with the second mixture is carried out by adding the second mixture to the first mixture, in particular under stirring, the step of mixing the first mixture with the second mixture is carried out more specifically for a duration of at least 10 min, and more specifically for a duration of at least 1 hour.

According to some embodiments, the step of mixing the first mixture with the second mixture is carried out at a temperature from 0 to 100°C, more specifically from 5 to 80°C, more specifically from 20 to 80°C, more specifically from 50 to 68°C, more specifically from 53 and 65 °C, and even more specifically from 55 to 63°C.

According to some embodiments, the pH of the aqueous suspension is from 4 to 8, more specifically from 4.5 to 7, and in particular from 5 to 7.

According to some embodiments, the process is not carried out under inert atmosphere.

According to some embodiments, the process does not comprise the addition of sodium borohydride NaBH₄, more specifically the process does not comprise the addition of sodium borohydride, and/or hydrazine, and/or lithium tetrahydruroalum inate.

According to some embodiments, the process does not comprise a step of adding an additional coloring agent.

According to some embodiments, the process further comprises a step of adding a homopolymer or copolymer of vinyl alcohol.

According to some embodiments, the core-shell metal nanoparticles have an average particle size from 10 to 250 nm, specifically from 20 to 200 nm, and even more specifically from 40 to 170 nm.

It is a second object of the present disclosure to provide a process for preparing an aqueous gel ink of core-shell metal nanoparticles, comprising the steps of:
(i) preparing the aqueous suspension as disclosed above,
(ii) concentrating the aqueous suspension obtained in step (i) by centrifugation and/or filtration, and
(iii) adding the concentrated aqueous suspension of nanoparticles obtained in step (ii) to a gel-based matrix for an aqueous ink, to obtain an aqueous gel ink.

According to some embodiments, the aqueous gel ink has a fixed color.

According to some embodiments, the aqueous suspension is concentrated by nanofiltration, in particular wherein the aqueous suspension is retained by a porous polysulfone membrane.

According to some embodiments, the gel-based matrix comprises one or more of a co-solvent, an antimicrobial agent, a corrosion inhibitor, an antifoam agent, and/or a rheology modifier.

It is a third object of the present disclosure to provide an aqueous suspension comprising core-shell metal nanoparticles, a dispersing agent, ascorbic acid and/or its residuals and an alkali metal salt, wherein said nanoparticles essentially consist of metal, wherein the core of said nanoparticles comprises silver and the shell of said nanoparticles comprises copper, and wherein the weight ratio of metallic copper to metallic silver is equal to or higher than 4.

According to some embodiments, the core of the metal nanoparticles consists or essentially consists of silver and the shell of the metal nanoparticles consists or essentially consists of copper.

According to some embodiments, the aqueous suspension exhibits a plasmonic effect.

According to some embodiments, the metal nanoparticles are the only coloring agent.

According to some embodiments, the nanoparticles are present at an amount of 0.11 to 2.0 weight%, more specifically from 0.22 to 1.1 weight%, and in particular from 0.23 to 0.88 weight%, based on the total weight of the aqueous suspension.

According to some embodiments, the aqueous suspension comprises from 0.1 to 1.5 weight%, more specifically from 0.2 to 1 weight%, and in particular from 0.2 to 0.8 weight% of copper based on the total weight of the aqueous suspension.

According to some embodiments, the aqueous suspension comprises from 0.01 to 0.5 weight%, more specifically from 0.02 to 0.1 weight%, and in particular from 0.03 to 0.08 weight% of silver based on the total weight of the aqueous suspension.

According to some embodiments, the dispersing agent is present at an amount of 0.1 to 1.1 weight%, based on the total weight of the aqueous suspension.

According to some embodiments, the dispersing agent comprises homopolymers or copolymers of vinylpyrrolidone, more specifically polyvinylpyrrolidone.

According to some embodiments, the ascorbic acid and/or its residuals is present at an amount of 0.00000002 to 0.2 weight%, based on the total weight of the aqueous suspension.

According to some embodiments, the alkali metal salt is chosen from a sodium salt, a potassium salt, a calcium salt, a barium salt, a cesium salt, and mixtures thereof, and in particular the alkali metal salt is a sodium salt.

According to some embodiments, the alkali metal salt is present at an amount of 0.00000002 to 0.2 weight%, in particular from 0.00000002 to 0.1 weight%, based on the total weight of the aqueous suspension.

According to some embodiments, the aqueous suspension comprises water at an amount of 50 to 95 weight%, more specifically from 70 to 90 weight%, and in particular from 75 to 90 weight%, based on the total weight of the aqueous gel ink.

According to some embodiments, the pH of the aqueous suspension is from 4 and 8, more specifically from 4.5 to 7, and in particular from 5 to 7.

According to some embodiments, the core-shell metal nanoparticles have an average particle size from 10 to 250 nm, specifically from 20 to 200 nm, and even more specifically from 40 to 170 nm.

According to some embodiments, the aqueous suspension further comprises a homopolymer or copolymer of vinyl alcohol.

According to some embodiments, the aqueous suspension is obtained by the process disclosed above.

It is a fourth object of the present disclosure to provide an aqueous gel ink comprising core-shell metal nanoparticles which essentially consist of metal, a dispersing agent, ascorbic acid and/or its residuals and an alkali metal salt, wherein the core of the metal nanoparticles comprises silver and the shell of said nanoparticles comprises copper and wherein the weight ratio of metallic copper to metallic silver is equal to or higher than 4

According to some embodiments, the aqueous gel ink exhibits a plasmonic effect.

According to some embodiments, the metal nanoparticles are the only coloring agent.

According to some embodiments, the aqueous gel ink has a fixed color.

According to some embodiments, the core of the metal nanoparticles consists or essentially consists of silver and the shell of the metal nanoparticles consists or essentially consists of copper.

According to some embodiments, the core-shell metal nanoparticles are present at an amount of 0.11 to 11 weight%, more specifically from 0.55 to 8.5 weight%, and in particular from 1.1 to 5.5 weight%, based on the total weight of the aqueous gel ink.

According to some embodiments, the aqueous gel ink comprises from 0.01 to 1 weight%, more specifically from 0.05 to 0.5 weight%, and in particular from 0.1 to 0.5 weight% of silver, based on the total weight of the aqueous gel ink.

According to some embodiments, the aqueous gel ink comprises from 0.1 to 10 weight%, more specifically from 0.5 to 8 weight%, and in particular from 1 to 5 weight% of copper, based on the total weight of the gel ink.

According to some embodiments, the dispersing agent is present at an amount of 0.01 to 1.5 weight%, more specifically from 0.01 to 1.5 weight%, more specifically from 0.2 to 1.5 weight%, and in particular from 0.5 to 1.5 weight%, based on the total weight of the aqueous gel ink.

According to some embodiments, the dispersing agent comprises homopolymers or copolymers of vinylpyrrolidone, more specifically polyvinylpyrrolidone.

According to some embodiments, the ascorbic acid and/or its residuals is present at an amount of 0.0000001 to 0.5 weight%, based on the total weight of the aqueous gel ink.

According to some embodiments, the alkali metal salt is present at an amount of 0.0000001 to 0.5 weight%, in particular from 0.0000002 to 0.1 weight%, based on the total weight of the aqueous gel ink.

According to some embodiments, the alkali metal salt is chosen from a sodium salt, a potassium salt, a calcium salt, a barium salt, a cesium salt, and mixtures thereof, and in particular the alkali metal salt is a sodium salt.

According to some embodiments, the aqueous gel ink comprises water at an amount of 25 to 80 weight%, more specifically from 30 to 70 weight%, and in particular from 30 to 60 weight%, based on the total weight of the aqueous gel ink.

According to some embodiments, the core-shell metal nanoparticles have an average particle size from 10 to 250 nm, specifically from 20 to 200 nm, and even more specifically from 40 to 170 nm.

According to some embodiments, the aqueous gel ink further comprises a homopolymer or copolymer of vinyl alcohol.

According to some embodiments, the aqueous gel ink further comprises one or more of a co-solvent, an antimicrobial agent, a corrosion inhibitor, an antifoam agent, and/or a rheology modifier.

According to some embodiments, the aqueous gel ink further comprises:
- a co-solvent, more specifically at an amount ranging from 5 to 35 weight%, relative to the total weight of the aqueous gel ink; and/or
- an antimicrobial agent, more specifically at an amount ranging from 0.01 to 0.5 weight%, relative to the total weight of the aqueous gel ink; and/or
- a corrosion inhibitor, more specifically at an amount ranging from 0.05 to 1 weight %, relative to the total weight of the aqueous gel ink; and/or
- an antifoam agent, more specifically at an amount ranging from 0.05 to 1 weight %, relative to the total weight of the aqueous gel ink; and/or
- a rheology modifier, specifically at an amount ranging from 0.08 to 2 weight %, relative to the total weight of the aqueous gel ink.

According to some embodiments, the aqueous gel ink is obtained by the process disclosed above.

It is a fifth object of the present disclosure to provide a writing instrument comprising:
- an axial barrel containing an aqueous gel ink disclosed above, and
- a pen body which delivers the aqueous gel ink stored in the axial barrel,
more specifically wherein the writing instrument is chosen in the group consisting of gel pens, felt pens, and even more specifically gel pens.

According to some embodiments, the writing instrument is configured to dispense from 150 to 800 mg/100m, specifically from 200 to 700 mg/100m, more specifically from 250 to 600 mg/100m and in particular from 250 to 500 mg/100m.

It is a sixth object of the present disclosure to provide a method of writing with an aqueous gel ink comprising the step of writing on an absorbing support, specifically paper, notably cellulosic paper, cardboard or textile, more specifically paper, with an aqueous gel ink disclosed above.

It is a seventh object of the present disclosure to provide a method of writing with an aqueous gel ink comprising the step of writing on a synthetic paper, specifically a synthetic polymer, more specifically wherein the synthetic polymer is selected from polyolefins, polyesters, polyethers, polyketones, polyamides, polyvinyls and polystyrenes, with an aqueous gel ink disclosed above.

The present disclosure makes it possible to address the need mentioned above. In particular, the present disclosure provides a plasmonic ink composition presenting an improved writing performance in terms of vividness and safety, that is produced in a simple and cost-effective manner.

This is achieved by the process according to the present disclosure and also by the aqueous gel ink according to the present disclosure. More specifically, the process according to the present disclosure allows to obtain an aqueous gel ink that has an improved vividness when applied on a support, more specifically on a porous support, and increased safety, with regards to already existing plasmonic inks comprising metal nanoparticles comprising or consisting of a single metal. In fact, the process according to the present disclosure allows to obtain core-shell metal nanoparticles which essentially consist of metal, wherein the core of said nanoparticles comprises at least one of silver or copper and wherein the shell of said nanoparticles comprises at least one of the other of silver or copper. This is achieved by mixing a silver salt and a copper salt with a dispersing agent, ascorbic acid, an alkali base and water. In fact, it was surprisingly discovered that the weight ratio of metallic copper to metallic silver should be equal to or higher than 4. As a matter of fact, when said weight ratio is lower than 4, the desired core-shell nanoparticles cannot be formed, as only nanoparticles comprising silver (and no copper) and nanoparticles comprising copper (and no silver) are formed.

In addition, the alkali base allows to avoid precipitation of the copper salts and promotes the formation of the core-shell nanoparticles (notably by avoiding an acidic pH in the reaction mixture). It shall be noted that in the absence of an alkali base, the formation of core-shell nanoparticles is prevented as only nanoparticles comprising silver (and no copper) and nanoparticles comprising copper (and no silver) are formed and then aggregate to form precipitates. While the dispersing agent allows to disperse the formed nanoparticles and reduce or even avoid agglomeration and/or aggregation and/or sedimentation of the nanoparticles so as to stabilize them, the presence of ascorbic acid, which is considered as a weak reducing agent, allows to slowly reduce the metal salts so as to form the core-shell nanoparticles. It shall equally be noted, that if a strong reducing agent is used instead of ascorbic acid, such as sodium borohydride for example, the reduction reaction is carried out very quickly and the formation of core-shell nanoparticles is prevented.

Consequently, the aqueous gel ink comprising core-shell metal nanoparticles according to the present disclosure presents an improved vividness when applied on a support, in particular on a porous support, compared to an aqueous gel ink comprising nanoparticles comprising or consisting of a single metal. In fact, core-shell metal nanoparticles allow to produce a synergistic effect due to the presence of more than one metals in the nanoparticles. This means that the properties of such nanoparticles are improved and can be more easily adjustable. For example, core-shell metal nanoparticles may have an improved chemical stability, an improved light absorption efficiency, an increased electrical conductivity, and tunable magnetic properties. Thus, the plasmon effect of the core-shell metal nanoparticles may be amplified compared to an aqueous gel ink comprising nanoparticles comprising or consisting of a single metal.

It shall be noted that the above benefits provided with the core-shell metal nanoparticles are not provided in the case of nanoparticles comprising alloys of different metals within each nanoparticle, that are not organized in the form of core-shell nanoparticles but are randomly distributed in the nanoparticle. More specifically, in case of core-shell nanoparticles, the surface of contact between the core that comprises one metal and the shell that comprises a different metal contributes to enhance the plasmonic effect whereas such effect cannot be obtained in case of nanoparticles comprising alloys of metals, as the interactions between the different metals of the alloy cannot be predicted (i.e. the "location" of each of the constituent metals in the nanoparticle is random) and thus the control of the properties of the nanoparticles becomes very difficult. For example, for such alloy metal nanoparticles, the light scattering may be reduced compared to pure metal nanoparticles, which means that the intensity/vividness of the color is lower.

Finally, due to the presence of the core-shell nanoparticles in the aqueous gel ink, the amount of silver is reduced (compared to metal nanoparticles consisting (or essentially consisting) of silver) in the ink, which renders such ink more safe and compliant to any future safety regulations.

### Brief Description of Figures:

**Figure 1** illustrates an image of the core-shell nanoparticles obtained from Example 1 by Transmission Electron Microscopy.
**Figure 2** illustrates the handwriting obtained in Example 1.
**Figure 3** illustrates an image of the nanoparticles obtained from Example 2 by Transmission Electron Microscopy.
**Figure 4** illustrates the handwriting obtained in Example 2.
**Figure 5** illustrates an image of the nanoparticles obtained from Example 3 by Transmission Electron Microscopy.

### Detailed Description:

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

### Aqueous suspension of core-shell metal nanoparticles and its preparation process

The present disclosure relates to a process for preparing an aqueous suspension of core-shell metal nanoparticles. By *"core-shell nanoparticles"* is meant a type of biphasic material that have an inner core structure and an outer shell made of different components. The core-shell metal nanoparticles of the present disclosure essentially consist of metal. By *"core-shell metal nanoparticles essentially consisting of metal"* is meant that the main component of the nanoparticles is metal and in particular that other ingredients in the metal nanoparticles such as impurities, such as metal oxides are only present in trace amounts. More specifically, the content of metal is of at least 95 weight%, even more specifically of at least 98 weight%, relative to the total weight of nanoparticles. More specifically, the content of impurities is lower than 5 weight%, even more specifically lower than 2 weight%, relative to the total weight of the nanoparticles. The core-shell metal nanoparticles may be identified for example by Energy Dispersive X-ray (EDX) microanalysis. EDX analysis is an analytical technic used to characterize the element composition and chemical analysis of a sample with atomic number (Z) superior to 3. Hence, the EDX is configured to collect X-ray signals from the silver metal (Ag) and copper metal (Cu) and allows to obtain the spatial visualization of the distribution of silver and copper metals. Energy Dispersive X-Ray (EDX) is usually used in combination with Transmission Electron Microscope (TEM) of 2D images (microscope: JEOL ARM 200) according to the standard ISO9001:2015.

According to some embodiments, the core-shell metal nanoparticles consist of metal.

The core-shell metal nanoparticles are formed in an aqueous suspension prepared by the process according to the present disclosure. Such process comprises mixing:
- at least one silver salt,
- at least one copper salt,
- a dispersing agent,
- ascorbic acid,
- an alkali base, and
- water.

The silver salt mentioned above can be chosen from silver nitrate (AgNO₃), silver perchlorate (AgClO₄), silver sulfate (Ag₂SO₄), silver chloride (AgCl), silver bromide (AgBr), silver hydroxide (AgOH), silver oxide (Ag₂O), silver tetrafluoroborate (AgBF₄), silver iodate (AglO₃), silver hexafluorophosphate (AgPF₆) and mixtures thereof. In particular, the silver salt may be silver nitrate (AgNO₃). The silver salt can be added/used at an amount from 0.01 to 2 weight%, more specifically from 0.05 to 1.5 weight%, in particular from 0.05 to 1 weight%, and in particular from 0.05 to 0.5 weight%, based on the total weight of the aqueous suspension.

The copper salt mentioned above can be a copper (II) salt. In particular, such salt can be chosen from copper sulfate (CuSO₄), copper chloride (CuCl₂), copper oxide (CuO), copper nitrate (Cu(NO₃)₂), copper fluoride (CuF₂), copper bromide (CuBr₂), copper carbonate (CuCO₃), copper acetate (Cu(OAc)₂), copper chlorate Cu(ClO₃)₂), copper azide (Cu(N₃)₂), copper hydroxide carbonate or malachite Cu₂(CO₃)₂(OH)₂), copper hydroxide (Cu(OH)₂), and mixtures thereof. In preferred embodiments, the copper salt may be copper sulfate (CuSO₄). The copper salt can be added/used at an amount from 0.5 to 15 weight%, more specifically from 1 to 10 weight%, in particular from 1 to 5 weight%, and in particular from 1 to 4 weight%, based on the total weight of the aqueous suspension.

According to the process according to the present disclosure, the weight ratio of (metallic) copper to (metallic) silver is equal to or higher than 4, more specifically equal to or higher than 6. It shall be noted that the inventors have surprisingly discovered that when the weight ratio is lower than 4, the desired core-shell nanoparticles cannot be formed and only nanoparticles comprising silver (and no copper) and nanoparticles comprising copper (and no silver) are formed. The content of metallic copper and metallic silver in the aqueous suspension and in the aqueous gel ink may be measured by elemental analysis using an Inductively Coupled Plasma Mass Spectrometry (ICP-MS) apparatus (apparatus: ICP OES Varian 725-ES Radial).

According to some embodiments, the weight ratio of (metallic) copper to (metallic) silver is from 4 to 20, more specifically from 6 to 20, even more specifically from 6 to 15 and in particular from 6 to 22.

As indicated above, in addition to the silver salt and copper salt, a dispersing agent is also added and used to form the desired core-shell nanoparticles. The dispersing agent can be chosen among homopolymers or copolymers of vinylpyrrolidone. According to some preferred embodiments, the homopolymer or copolymer of vinylpyrrolidone may be polyvinylpyrrolidone. In fact, such component offers excellent steric stability and/or helps prevent metal nanoparticles from directly contacting and/or aggregating and/or sedimenting in a water-based ink, which allows to obtain a stronger and/or a more stable plasmon effect (such effect will be explained below). In particular, such agglomeration and/or aggregation and/or sedimentation may prevent obtaining a plasmonic effect.

According to some embodiments, the dispersing agent may be used at an amount from 0.1 to 1.1 weight% based on the total weight of the aqueous suspension. More specifically, said amount may be from 0.15 to 1.0 weight%, more specifically from 0.2 to 0.8 weight%, and in particular from 0.25 to 0.4 weight%, based on the total weight of the aqueous suspension. In fact, it is advantageous to have a minimal amount of the dispersing agent to disperse the formed nanoparticles and reduce or even avoid agglomeration and/or aggregation and/or sedimentation of the nanoparticles so as to stabilize them. The above-mentioned ranges are advantageous for the formation of the core-shell metal nanoparticles.

According to some embodiments, in addition to the dispersing agent, the process further comprises a step of adding an additional dispersing agent (other than the above (first) dispersing agent). Said additional dispersing agent may be a homopolymer or copolymer of vinyl alcohol such as polyvinyl alcohol. Said additional dispersing agent may be added at an amount from 0.01 to 1 weight% relative to the total weight of the aqueous suspension.

According to some embodiments, the total amount of dispersing agent (i.e. total amount of homopolymer or copolymer of vinylpyrrolidone and of further dispersing agent) is lower than or equal to 1.1 weight%, based on the total weight of the aqueous suspension.

Furthermore, ascorbic acid is added in the mixture so as to form the core-shell metal nanoparticles. More particularly, the presence of ascorbic acid, which is considered as a weak reducing agent, is necessary so as to slowly reduce the metal salts and form the core-shell metal nanoparticles. It shall be noted that the same result (formation of core-shell metal nanoparticles) cannot be achieved with a strong reducing agent (such as sodium borohydride, hydrazine or lithium tetrahydroaluminate). In fact, in this case, the reduction reaction is carried out very quickly and the formation of core-shell nanoparticles is prevented. Consequently, according to some embodiments, the process according to the present disclosure does not comprise a step of adding one or more further reducing agents, in particular such as of sodium borohydride, and/or hydrazine, and/or lithium tetrahydruroaluminate. In preferred embodiments, the process according to the present disclosure does not comprise adding sodium borohydride, hydrazine, and lithium tetrahydruroaluminate.

According to some embodiments, the ascorbic acid may be added/used at an amount from 1 to 10 weight%, more specifically from 2 to 8 weight%, and in particular from 3 to 7 weight%, based on the total weight of the aqueous suspension. As ascorbic acid is a weak reducing agent, the disclosed amounts of ascorbic acid allow to successfully reduce the silver salt and copper salt in metallic silver and metallic copper respectively, in particular when ascorbic acid is the sole reducing agent (when no further reducing agent is added).

Additionally, an alkali base is added in the mixture of the process according to the present disclosure. As mentioned above, the alkali base allows to avoid precipitation of the copper salts and further promotes the formation of the core-shell nanoparticles, notably by adjusting the pH of the mixture and by avoiding an acidic pH in the reaction mixture. Indeed, due to the use of ascorbic acid in the process according to the present disclosure, the pH of the mixture is acidic (i.e. below 7). It shall be noted that in the absence of an alkali base, the formation of core-shell nanoparticles is prevented as only nanoparticles comprising silver (and no copper) and nanoparticles comprising copper (and no silver) are formed and then aggregate to form precipitates.

The alkali base may be chosen from metallic oxides and/or metallic hydroxides. More specifically the alkali base may be chosen from sodium oxide (Na₂O), potassium oxide (K₂O), cesium oxide (Cs2O), calcium oxide (CaO), barium oxide (BaO), sodium hydroxide (NaOH), potassium hydroxide (KOH), cesium hydroxide (CsOH), calcium hydroxide (Ca(OH)₂), barium hydroxide (Ba(OH)₂), and mixtures thereof. In some preferred embodiments, the alkali base may be a metallic hydroxide, and in particular sodium hydroxide (NaOH).

According to some embodiments, the alkali base may be added/used at an amount from 0.5 to 30 weight%, more specifically from 1 to 20 weight%, and in particular from 2 to 10 weight%, based on the total weight of the aqueous suspension.

The process according to the present disclosure may be carried out at a temperature from 0 to 100°C, more specifically from 5 to 80°C, more specifically from 20 to 80°C, more specifically from 50 to 68°C, more specifically from 53 to 65 °C, and even more specifically from 55 to 63°C. The above temperature range may be advantageous for the formation of the core-shell metal nanoparticles. According to preferred embodiments, this temperature may be from 53 to 65 °C. According to more preferred embodiments, this temperature may be from 55 to 63°C.

According to some embodiments, the process according to the present disclosure may be carried out in ambient atmosphere (ambient atmospheric pressure). In other words, according to some embodiments, this process is not carried out under inert atmosphere (for example the process is not carried out under argon or nitrogen atmosphere).

According to some embodiments, the process according to the present disclosure may comprise a step of preparing a first mixture comprising water, the silver salt and the copper salt, and then adding to that first mixture a second mixture comprising the ascorbic acid. The pH of the first mixture may be from 5 to 9, and more specifically from 6 to 8. The pH of the second mixture may be from 5 to 9, and more specifically from 6 to 8. The alkali base may be added in the first mixture and/or the second mixture, and more specifically the alkali base may be added in the first mixture and the second mixture. A pH from 5 to 9, and more particularly from 6 to 8 allows to promote the formation of the core-shell nanoparticles.

According to some preferred embodiments, the process according to the present disclosure may comprise a first step (i) of preparing a first mixture comprising the silver salt, the copper salt, the dispersing agent, alkali base and water, and a second step (ii) of preparing a second mixture comprising the ascorbic acid, alkali base and water. Said embodiment further comprises a third step (iii) of mixing the first mixture with the second mixture to form the aqueous suspension.

According to some embodiments, the first mixture may have a pH from 5 to 9, and more specifically from 6 to 8. For example, said pH may be from 5 to 6, or from 6 to 7 or from 7 to 8 or from 8 to 9. This specific pH is achieved by adding the alkali base in the mixture comprising the ascorbic acid and the water.

According to some embodiments, the second mixture may have a pH from 5 to 9, and more specifically from 6 to 8. For example, said pH may be from 5 to 6, or from 6 to 7 or from 7 to 8 or from 8 to 9. This specific pH is achieved by adding the alkali base in the mixture comprising the silver salt, the copper salt, the dispersing agent and the water.

Consequently, the alkali base is added to the first mixture and/or the second mixture and more specifically the alkali base is added both to the first mixture and the second mixture.

According to some preferred embodiments, the pH of the first mixture may be the same as the pH of the second mixture.

Prior to their mixing and while being prepared, the first mixture and/or (preferably and) the second mixture may be at a temperature from 5 to 40°C, more specifically from 10 to 30°C and in particular from 15 to 25°C. In addition, prior to their mixing and while being prepared, the first mixture and/or (preferably and) the second mixture may be at ambient atmospheric pressure (around 1 bar).

According to some embodiments, the step of mixing the first mixture with the second mixture may be carried out by adding the first mixture to the second mixture. However, according to preferred embodiments, the step of mixing the first mixture with the second mixture may be carried out by adding the second mixture to the first mixture. The step of mixing the first mixture with the second mixture may be done under stirring, more specifically for a duration of at least 10 minutes, and more specifically for a duration of at least 1 hour.

Furthermore, the step of mixing the first mixture with the second mixture may be carried out at a temperature from 0 to 100°C, more specifically from 5 to 80°C, more specifically from 20 to 80°C, more specifically from 50 to 68°C, more specifically from 53 to 65 °C, and even more specifically from 55 to 63°C. The above temperature range may be advantageous for the formation of the core-shell metal nanoparticles. According to preferred embodiments, this temperature may be from 53 to 65°C. According to more preferred embodiments, this temperature may be from 55 to 63°C.

According to some embodiments, the pH of the aqueous suspension obtained after the third step (iii) of mixing the first mixture with the second mixture is from 4 and 8, more specifically from 4.5 to 7, and in particular from 5 to 7. For example, such pH may be from 4 to 5, or from 5 to 6, or from 6 to 7, or from 7 to 8. According to preferred embodiments, the pH of the aqueous suspension is lower than the pH of the first mixture and lower than the pH of the second mixture.

Consequently, the process described above allows to obtain core-shell metal nanoparticles in an aqueous suspension. The present disclosure thus, further relates to an aqueous suspension comprising core-shell metal nanoparticles.

According to some embodiments, the core-shell nanoparticles may have an essentially spherical shape. More specifically, the external surface of the core-shell nanoparticles (i.e. the external surface of the (outer) shell of the core-shell metal nanoparticles) may present diverse roughness, i.e. may have one or more protrusions. In other words, the external surface of the core-shell nanoparticles (i.e. the external surface of the (outer) shell of the core-shell metal nanoparticles) is not smooth.

The core of said nanoparticles comprises at least one of silver or copper and the shell of said nanoparticles comprises at least one of the other of silver or copper. In other words, during the process according to the present disclosure the silver salt and the copper salt are reduced to metallic silver and metallic copper respectively, so as to form the core-shell metal nanoparticles.

According to some embodiments, the core of the metal nanoparticles comprises, essentially consists, or consists of copper and the shell of the metal nanoparticles comprises, essentially consists, or consists of silver.

However, according to preferred embodiments, the core of the metal nanoparticles comprises, essentially consists, or consists of silver and the shell of the metal nanoparticles comprises, essentially consists, or consists of copper. Hence, it is preferable when the metallic silver is found in the core of the metal nanoparticles, while the metallic copper is found in the shell of the metal nanoparticles.

The process according to the present disclosure allows to form core-shell nanoparticles having a weight ratio of (metallic) copper to (metallic) silver equal to or higher than 4, more preferably equal to or higher than 6. Such embodiment is advantageous as it is of interest to reduce the amount of silver without affecting the intensity/vividness of the final color.

The core-shell metal nanoparticles according to the present disclosure play the role of a coloring agent. Thus, according to preferred embodiments, the aqueous suspension is devoid of any other additional coloring agent (therefore the above-described process does not comprise a step of adding an additional coloring agent). In other words, according to preferred embodiments, the core-shell metal nanoparticles are the only coloring agent.

According to some embodiments, the core-shell metal nanoparticles have an average particle size from 10 to 250 nm, more specifically from 20 to 200 nm, and even more specifically from 40 to 170 nm. More specifically, the longest dimension of the core-shell metal nanoparticles is from 10 to 250 nm, more specifically from 20 to 200 nm, and even more specifically from 40 to 170 nm. Even more specifically, all dimensions of the core-shell metal nanoparticles range from 10 to 250 nm, more specifically from 20 to 200 nm, and even more specifically from 40 to 170 nm. This average particle size and the dimension of the particles may be determined by Transmission Electron Microscopy analysis of 2D images (microscope: JEOL ARM 200), according to the standard ISO9001:2015. This analysis can be complemented by a Dynamic Light Scattering (DLS) analysis. Dynamic light scattering (DLS) is a particle sizing technique that relies on the interaction of coherent light with the Brownian motion of particles in a small volume. This leads to a requirement of dilute solutions, in particular dilution of at least 10. DLS analysis can be carried out with a DLS Zetasizer Ultra apparatus from Malvern.

According to some embodiments, the aqueous suspension may comprise core-shell metal nanoparticles at an amount from 0.11 to 2 weight%, more specifically from 0.22 to 1.1 weight%, and in particular from 0.23 to 0.88 weight%, based on the total weight of the aqueous suspension.

According to some embodiments, the aqueous suspension may comprise copper at an amount from 0.1 to 1.5 weight%, more specifically from 0.2 to 1 weight%, and in particular from 0.2 to 0.8 weight%, based on the total weight of the aqueous suspension.

According to some embodiments, the aqueous suspension may comprise silver at an amount from 0.01 to 0.5 weight%, more specifically from 0.02 to 0.1 weight%, and in particular from 0.03 to 0.08 weight%, based on the total weight of the aqueous suspension.

The aqueous suspension, aside from the core-shell metal nanoparticles, comprises a dispersing agent. The nature and utility of such component is described above. The dispersing agent may be present in the aqueous suspension at an amount from 0.1 to 1.1 weight% based on the total weight of the aqueous suspension. In addition to the dispersing agent, the process further comprises a step of adding an additional dispersing agent (other than the above first dispersing agent). Said additional dispersing agent may be a homopolymer or copolymer of vinyl alcohol such as polyvinyl alcohol. Said additional dispersing agent may be added in the aqueous suspension at an amount from 0.01 to 1 weight%, relative to the total weight of the aqueous suspension.

According to some embodiments, the total amount of dispersing agent (i.e. total amount of homopolymer or copolymer of vinylpyrrolidone and of further dispersing agent) is lower than or equal to 1.1 weight%, based on the total weight of the aqueous suspension.

Additionally, the aqueous suspension comprises ascorbic acid and/or its residuals. By *"residuals"* is meant any oxidized form or any product of decomposition of the ascorbic acid. This term is used because as the ascorbic acid is used to reduce the silver salt and the copper salt in metallic silver and metallic copper to form the core-shell metal nanoparticles, in some embodiments, the ascorbic acid may already be (largely) consumed in the process of preparing the core-shell metal nanoparticles and that (mostly) residuals of the ascorbic acid, e.g. their oxidized forms or a products of further decomposition, are present. Therefore, according to some embodiments, the ascorbic acid and/or its residuals may be present at an amount of 0.00000002 to 0.2 weight%, based on the total weight of the aqueous suspension.

Additionally, the aqueous suspension further comprises an alkali metal salt. By *"alkali metal salt"* is meant any salt formed during the above process for the preparation of the nanoparticles that comprises the alkali cation of the alkali base detailed above. Therefore, the alkali metal salt may be chosen from a sodium salt, a potassium salt, a calcium salt, a barium salt, a cesium salt, and mixtures thereof. In preferred embodiments, the alkali metal salt may be a sodium salt. Said alkali metal salt may be present in the aqueous suspension at an amount from 0.00000002 to 0.2 weight%, in particular from 0.00000002 to 0.1 weight%, based on the total weight of the aqueous suspension.

According to some embodiments, the aqueous suspension may further comprise water. Water can be present at an amount from 50 to 95 weight%, more specifically from 70 to 90 weight%, and in particular from 75 to 90 weight%, based on the total weight of the aqueous suspension.

According to some embodiments and as already mentioned above, the pH of the aqueous suspension may be from 4 and 8, more specifically from 4.5 to 7, and in particular from 5 to 7.

The aqueous suspension described above may exhibit a plasmonic effect (also called plasmon effect). In other words, the core-shell metal nanoparticles may be plasmonic metal nanoparticles. Hence, different plasmonic colors can be obtained depending on the content of the components used.

In fact, the plasmonic color is due to both the light absorption by metal nanoparticles and/or the spacing between them in the aqueous suspension (and in the gel ink that will be described below). Depending on their size, shape and distance, the color of the aqueous suspension (and that of the aqueous gel ink) may change, as well as its properties.

The term *"plasmonic (metal) nanoparticles"* is well-known in the art and i.a. attributed its common meaning in the art. Additionally or alternatively, the term *"plasmonic (metal) nanoparticles"* may refer to particles, whose electron density can couple with electromagnetic radiation of wavelengths greater than the particle due to a dielectric-metal interface between the particles and the medium the particles are dispersed within. The coupling with electromagnetic radiation may be referred to as plasmonic effect. Additionally or alternatively, the term *"plasmonic (metal) nanoparticles"* may refer to particles configured to form plasmonic clusters with adjacent plasmonic nanoparticle(s). The coupling with adjacent plasmonic nanoparticles may result in plasmonic coupling. The plasmonic clusters may form a type of bonding or antibonding character between the plasmonic nanoparticles similar to molecules, in particular by the surface electrons of each particle collectively oscillating. Two (metal) nanoparticles may in particular form a plasmonic cluster if the distance between the (metal) nanoparticles is less than the diameter of a particle. Both the plasmonic effect, as well as the plasmonic coupling may influence the color of a plasmonic composition, in particular by changing the light absorption and light scattering characteristics. Further, both the plasmonic effect and plasmonic coupling depend on the particle size and shape of the (metal) nanoparticles as well as on distance between the metal nanoparticles. The above-mentioned plasmonic effect can be characterized by UV (ultraviolet)-visible-NIR (near infra-red) absorption spectroscopy.

According to some embodiments, the aqueous suspension of core-shell metal nanoparticles may be obtained by the process described above.

### Aqueous gel ink of core-shell metal nanoparticles and its preparation process

The present disclosure further relates to an aqueous gel ink of core-shell metal nanoparticles and to a process for preparing said aqueous gel ink.

For the purposes of the present disclosure, the term *"ink'* is intended to mean a *"writing ink'* which is intended to be used in a writing instrument, and in particular in a pen. A writing ink should not be confused with a *"printing ink'* which is used in printing machines, and which does not have the same technical constraints and thus the same specifications. Indeed, a writing ink must not contain solid particles of which the size is greater than the channels of the writing instrument, in order to avoid blocking them, which would inevitably lead to writing being irreversibly stopped. In addition, it must allow an ink flow rate suitable for the writing instrument used. It must also dry sufficiently rapidly to avoid smudging the writing medium. It must also avoid the problems of migration (bleeding) over time. Thus, the ink according to the present disclosure will be suitable for the writing instrument for which it is intended, in particular for a pen.

In addition, a *"writing ink'* must not be too fluid, so as to avoid leaks during writing. However, it must be sufficiently fluid to facilitate the flow of the writing action. In the particular case of the present disclosure, the writing ink is more specifically a *"gelink'* (which corresponds therefore to a thixotropic ink), in particular the viscosity measured at rest (at a shear rate of 0.01 s⁻¹) at 20°C is different and in particular higher than the viscosity measured with a shear rate of 100 s⁻¹ at 20°C using the same rheometer such as a cone-and-plate rheometer for example Malvern KINEXUS with a cone of 60 mm and an angle of 1°.

In a particular embodiment, the viscosity of the aqueous gel ink according to the present disclosure measured under these conditions ranges from 1,000 to 7,000 mPa.s, specifically from 2,000 to 5,000 mPa.s, and more specifically from 2,500 to 3,500 mPa.s, at rest (i.e. with a shear rate of 1 s⁻¹), and specifically from 5 to 50 mPa.s, more specifically from 7 to 40 mPa.s, and still more specifically from 10 to 20 mPa.s with a shear rate of 5,000 s⁻¹. Specifically, in some embodiments, said viscosity is stable during storage for at least three months at 40°C and 20% relative humidity, in particular the viscosity will not have a more than 50% decrease in said time period. More specifically, the return to viscosity at rest after shear may additionally be very quick, specifically at most a few (e.g. 1, 2, 3, 4 or 5) minutes, in order to avoid static leakage in the minutes after writing.

The aqueous gel ink according to the present disclosure may provide a plasmonic effect, i.e. be a plasmonic ink. The term *"plasmonic ink'* is well-known in the art and i.a. attributed its common meaning in the art. Additionally or alternatively, the term *"plasmonic ink'* may refer to an ink comprising plasmonic structures. Additionally, or alternatively, the term *"plasmonic ink'* may refer to an ink comprising plasmonic nanoparticles, in particular plasmonic metal nanoparticles (such metal nanoparticles being defined above).

The process for preparing the aqueous gel ink comprises the steps of:
(i) preparing the aqueous suspension described above,
(ii) concentrating the aqueous suspension obtained in step (i) by centrifugation and/or filtration; and
(iii) adding the concentrated aqueous suspension of nanoparticles obtained in step (ii) to a gel-based matrix for an aqueous ink, to obtain an aqueous gel ink.

Therefore, the process for preparing the aqueous gel ink allows to prepare the core-shell metal nanoparticles *ex-situ* (first the aqueous suspension is prepared which will then be added to the rest of the ingredients).

According to some embodiments, in step (ii), the aqueous suspension may be concentrated by nanofiltration. The process of nanofiltration is not particularly limited and includes, in particular filtration (with or without assistance of pressure) through a membrane which retains at least a portion of the metal nanoparticles in the aqueous suspension. Without wishing to be bound by theory, it is believed that filtration in the presence of the aforementioned dispersing agent(s) is beneficial for preventing/reducing agglomeration during the concentration step. According to some embodiments, the nanoparticles are retained by a porous polysulfone membrane.

According to some embodiments, in step (ii), the aqueous suspension may be concentrated by centrifugation. In some embodiments, centrifugation can be performed at 8,000 to 50,000 rpm, more specifically at 9,000 to 25,000 rpm and in particular at 10,000 to 15,000 rpm, for at least 10 minutes, more specifically at least 20 minutes and in particular at least 30 minutes.

In some embodiments, the concentrated aqueous suspension of nanoparticles obtained in step (ii) may have a volume which is from 1/10 to 1/3000 of the volume of aqueous suspension of nanoparticles (prior to concentration), more specifically from 1/50 to 1/1500, and in particular from 1/200 to 1/800.

In some embodiments, in step (ii), the aqueous suspension may be concentrated by filtration, followed by centrifugation.

The term *"gel-based matrix"* is a placeholder for summarizing the remainder of components of the aqueous gel ink. It can be a single composition or be present as a plurality of physically distinct compositions. Such gel-based matrix may comprise one or more of a co-solvent, an antimicrobial agent, a corrosion inhibitor, an antifoam agent, and/or a rheology modifier. These components will be described further below.

The aqueous gel ink according to the present disclosure comprises core-shell metal nanoparticles. Said core-shell metal nanoparticles are described above.

According to some embodiments, the aqueous gel ink may have a fixed color. In some embodiments, the aqueous suspension of nanoparticles has a fixed color under agitation. In the sense of the present disclosure, the term *"fixed color"* is intended to mean that the color of the aqueous writing ink, as perceived by visual observation, is the same before and after application on an absorbing support, specifically paper, carboard or textiles, within 7 calendar days (one week).

According to some embodiments, the aqueous gel ink may comprise core-shell metal nanoparticles at an amount from 0.11 to 11 weight%, more specifically from 0.55 to 8.5 weight%, and in particular from 1.1 to 5.5 weight%, based on the total weight of the aqueous gel ink.

According to some embodiments, the aqueous gel ink may comprise (metallic) copper at an amount from 0.1 to 10 weight%, more specifically from 0.5 to 8 weight%, and in particular from 1 to 5 weight%, based on the total weight of the aqueous gel ink.

The aqueous gel ink according to the present disclosure comprises core-shell nanoparticles having a weight ratio of (metallic) copper to (metallic) silver equal to or higher than 4, more preferably equal to or higher than 6.

According to some embodiments, the aqueous gel ink may comprise (metallic) silver at an amount from 0.01 to 1 weight%, more specifically from 0.05 to 0.5 weight%, and in particular from 0.1 to 0.5 weight%, based on the total weight of the aqueous gel ink.

The aqueous gel ink, aside from the core-shell metal nanoparticles, comprises a dispersing agent. More specifically, as disclosed above, the dispersing agent may be a homopolymer or copolymer of vinylpyrrolidone. In particular, said dispersing agent may be polyvinyl pyrrolidone. More specifically, the dispersing agent may be present in the gel ink at an amount of 0.01 to 2 weight%, more specifically from 0.2 to 1.5 weight%, and in particular from 0.5 to 1.5 weight%, based on the total weight of the aqueous gel ink. The nature and utility of such component are described above. In addition to the dispersing agent, the aqueous gel ink may further comprise a step of adding an additional dispersing agent (other than the above (first) dispersing agent). Said additional dispersing agent may be a homopolymer or copolymer of vinyl alcohol such as polyvinyl alcohol. Said additional dispersing agent may be added at an amount from 0.01 to 1 weight %,relative to the total weight of the aqueous gel ink.

Additionally, the aqueous gel ink comprises ascorbic acid and/or its residuals (said residuals being explained above). Therefore, according to some embodiments, the ascorbic acid and/or its residuals may be present at an amount of 0.0000001 to 0.5 weight%, based on the total weight of the aqueous gel ink.

Additionally, the aqueous gel ink further comprises an alkali metal salt. This alkali metal salt has been described above. Said alkali metal salt may be present in the aqueous gel ink at an amount from 0.0000001 to 0.5 weight%, in particular from 0.0000002 to 0.1 weight%, based on the total weight of the aqueous gel ink.

According to some embodiments, the aqueous gel ink may further comprise water. Water can be present at an amount from 25 to 80 weight%, more specifically from 30 to 70 weight%, and in particular from 30 to 60 weight%, based on the total weight of the aqueous gel ink.

According to some preferred embodiments, the aqueous gel ink does not comprise any other (additional) coloring agent (other than the core-shell metal nanoparticles). In other words, it is preferred that the core-shell metal nanoparticles are the only coloring agent in the aqueous gel ink. Therefore, in this case, the aqueous gel ink does not contain any dyes or pigments.

According to other, less preferred embodiments, the aqueous gel ink may contain a further coloring agent, other than the core-shell metal nanoparticles to further adjust the color impression or to render the ink a color changing ink.

For the purposes of the present disclosure, the term *"color changing ink'* is intended to mean any ink the color of which (first or initial color) can be changed after writing to another color (second color), which is advantageously different from the first color, by the use of the eradicator fluid such as the eradicator fluid disclosed in applicant's copending PCT application PCT/EP2022/054728 which is incorporated herein in its entirety by reference thereto. The color of the written mark obtained, in particular on a porous support, by this ink can thus be changed to another color any time after writing by the use of such an eradicator fluid. Specifically, the ink may be an irreversible color changing aqueous writing ink. Once the color has changed, it is not possible to change it again, and in particular it is not possible to go back to the initial color (first color).

In particular the further coloring agent can be a dye, a pigment or mixtures thereof, in particular a dye.

The dye or pigment can be any dye or pigment known by the one skilled in the art and which can be used in aqueous writing inks, specifically in aqueous writing gel ink. Specifically, the total amount of the further coloring agent in the aqueous gel ink may range from 0.01 to 30 weight%, more specifically from 0.05 to 25 weight%, based on the total weight of the aqueous gel ink.

In a specific embodiment the coloring agent may be one or more dyes.

The term *"dyes"* should be understood as meaning colored, mineral or organic particles of any form, which are soluble in the medium in which they are solubilized, i.e. the aqueous medium of the aqueous gel ink. Advantageously, the dye is not a thermochromic dye or a photochromic dye or a pressure sensitive dye.

The dye may be chosen for example in the group consisting of direct dyes (for example C.I direct black 17, 19, 22, 32, 38, 51, 71; C.I direct yellow 4, 26, 44, 50; C.I direct red 1, 4, 23, 31, 37, 39, 75, 80, 81, 83, 225, 226, 227; C.I direct blue 1, 15, 41, 71, 86, 87, 106, 108, 199, and the like), acid dyes (for example C.I acid black 1, 2, 24, 26, 31, 52, 107, 109, 110, 119, 154; C.I acid yellow 1, 7, 17, 19, 23, 25, 29, 38, 42, 49, 61, 72, 78, 110, 127, 135, 141, 142; C.I acid red 8, 9, 14, 18, 26, 27, 33, 35, 37, 51, 52, 57, 82, 83, 87, 92, 94, 111, 129, 131, 138, 186, 249, 254, 265, 276; C.I acid violet 15, 17, 49; C.I acid blue 1, 3, 7, 9, 15, 22, 23, 25, 40, 41, 43, 62, 78, 83, 90, 93, 100, 103, 104, 112, 113, 158; C.I acid green 3, 9, 16, 25, 27; C.I acid orange 56, and the like), food dyes (such as C.I. food yellow 3, and the like), Malachite green (C.I 4200) Victoria blue FB (C.I. 44045) methyl violet FN (C.I. 42535), rhodamine F4G (C.I. 45160), and rhodamine 6GCP (C.I 45160), and mixtures thereof.

When present, the total amount of the dye(s) in the aqueous gel ink may range from 0.01 to 30 weight%, advantageously from 0.05 to 25 weight%, and more advantageously from 0.3 to 10 weight%,, relative to the total weight of the aqueous gel ink.

According to some embodiments, the coloring agent may comprise one or more pigments.

The term *"pigment'* should be understood as meaning white or colored, mineral or organic particles of any form with the exception of metal nanoparticle, which are insoluble in the medium in which they are solubilized, i.e. the aqueous medium of the aqueous gel ink.

The pigment may for example be an inorganic pigment such as a carbon black, ultramarine and titanium dioxide pigment, an organic pigment such as an azo-based pigment, phthalocyanine-based pigment, indigo pigment, thioindigo pigment, thren pigment, quinacridone-based pigment, anthraquinone-based pigment, thron-based pigment, diketopyrrolopyrrole-based pigment, dioxazine-based pigment, perylene-based pigment, perinone-based pigment and isoindolinone-based pigment, a fluorescent pigment, light-storing pigment, a pearlescent pigment, synthetic mica, glass flake, alumina and transparent film with a metal oxide such as titanium oxide, and the like. The pigments are also generally contained in a dispersion, where the grinding down or particle size reduction is accompanied by appropriate dispersants to achieve stable dispersions. The pigment is specifically a pigment dispersion, more specifically chosen in the group consisting of pigment black 7 (such as Flexiverse III black 7 by SunChemical^{®}), pigment blue 15:3 (such as APE FRE BL 15:3 DISP by SunChemical^{®}), pigment red (such as Pigment red 210 by SunChemical^{®}), pigment green 7 (such as Sunsperse Eco green, Flexiverse FD Green, Flexiverse Green 7, Flexiverse HC GRN 7 by SunChemical^{®}), pigment violet 23 (such as Cellusperse^{®} A Violet 4 BP by SunChemical^{®}), pigment yellow 74 (such as FG Yellow 1SL by SunChemical^{®}) and mixtures thereof. In a specific embodiment, the pigment is chosen in the group consisting of pigment black 7 (such as Flexiverse III black 7 by SunChemical^{®}), pigment blue 15:3 (such as APE FRE BL 15:3 DISP by SunChemical^{®}), and mixtures thereof.

In some embodiments, the diameter of the pigment in the pigment dispersion is less than 1 µm, and preferably less than 0.7 µm.

When present, the total amount of the pigment dispersion in the aqueous gel ink may range from 0.1 to 30 weight%, more specifically from 0.05 to 25 weight%, still more specifically from 0.3 to 10 weight%, relative to the total weight of the aqueous gel ink.

According to some embodiments, the aqueous gel ink may comprise a co-solvent. Among the co-solvents that can be used, mention may be made of polar solvents miscible in water such as:
- glycol ethers such as triethylene glycol, polyethylene glycol, diethylene glycol monoethyl ether, diethylene-glycol-mono butyl ether, dipropyleneglycol monobutyl ether, tripropylene glycol monomethyl etherphenoxyethanol, phenoxypropanol,
- alcohols such as linear or branched alcohol in C₁-C₁₅ such as benzyl alcohol, glycerin, diglycerin, polyglycerin,
- esters such as ethyl acetate or propyl acetate,
- carbonate esters such as propylene carbonate or ethylene carbonate, and
- mixtures thereof.

In a specific embodiment, the co-solvent is chosen in the group consisting of glycol ethers, and more specifically is chosen in the group consisting of triethylene glycol, polyethylene glycol, diethylene glycol monoethyl ether, diethylene-glycol-mono butyl ether, dipropyleneglycol monobutyl ether, tripropylene glycol monomethyl ether, phenoxyethanol, phenoxypropanol, and mixtures thereof. In a further specific embodiment, the co-solvent is chosen in the group consisting of triethylene glycol, polyethylene glycol and mixtures thereof.

According to some embodiments, the total amount of the co-solvent in the aqueous gel ink ranges from 5 to 35 weight%, more specifically from 9 to 30 weight%, even more specifically from 11 to 25 weight%, relative to the total weight of the aqueous gel ink.

According to some embodiments, the aqueous gel ink may comprise an antimicrobial agent such as isothiazolinone (ACTICIDE^{®} from Thor), specifically chosen in the group consisting of 1,2-benzisothiazolin-3-one, 2-methyl-4-isothiazolin-3-one, and mixtures thereof.

Specifically, the total amount of the antimicrobial agent in the aqueous gel ink may range from 0.01 to 0.5 weight%, more specifically from 0.1 to 0.2 weight%, relative to the total weight of the aqueous gel ink.

In some embodiments, the aqueous gel ink may comprise a corrosion inhibitor, specifically chosen in the group consisting of tolytriazole, benzotriazole, and mixtures thereof.

Specifically, the total amount of the corrosion inhibitor in the aqueous gel ink may range from 0.05 to 1 weight%, more specifically from 0.07 to 0.6 weight%, even more specifically from 0.08 to 0.4 weight%, relative to the total weight of the aqueous gel ink.

In some embodiments, the aqueous gel ink may comprise an antifoam agent, specifically a polysiloxane-based antifoam agent, and more specifically an aqueous emulsion of modified polysiloxane (such as MOUSSEX^{®} from Synthron, TEGO^{®} Foamex from Evonik).

Specifically, the total amount of the antifoam agent in the aqueous gel ink may range from 0.05 to 1 weight%, more specifically from 0.1 to 0.5 weight%, even more specifically from 0.2 to 0.4 weight%, relative to the total weight of the aqueous gel ink.

The aqueous gel ink may comprise a rheology modifier capable of generating a gelling effect, in particular capable of generating a thixotropic phenomenon wherein the viscosity depends on the time of shear rate, for example chosen in the group consisting of polysaccharides such as xanthan gum, gum arabic, and mixtures thereof.

Specifically, the total amount of the rheology modifier in the aqueous gel ink may range from 0.08 to 2 weight%, more specifically from 0.2 to 0.8 weight%, even more specifically from 0.3 to 0.6 weight%, relative to the total weight of the aqueous gel ink.

According to some embodiments, the aqueous gel ink may also comprise still other additives such as:
- pH regulators like sodium hydroxide and triethanolamine,
- lubricants,
- coalescing agents, crosslinking agents,
- wetting agents,
- plasticizers,
- antioxidants, and
- UV stabilizers.

According to some embodiments, the aqueous gel ink has a color selected from red, orange, yellow, green, cyan, blue, magenta, purple, black, gray, pink, maroon, brown, beige, tan, peach, lime, olive, turquoise, teal, navy blue, indigo, and violet; more specifically a color selected from red, green, black or blue and in particular black or blue.

According to some embodiments, the aqueous gel ink comprising the core-shell metal nanoparticles may be obtained by the process described above.

### Writing instrument and method for writing

The present disclosure further relates to a writing instrument. Said writing instrument comprises:
- an axial barrel containing the aqueous gel ink described above, and
- a pen body which delivers the aqueous gel ink stored in the axial barrel.

According to some embodiments, the writing instrument may be chosen from a gel pen, and a felt pen. More specifically, the writing instrument is a gel pen.

According to some embodiments, the pen body comprises a writing tip. The writing tip of the writing instrument may comprise a ball point having a ball size of between about 0.6 mm and about 2 mm, in particular between about 0.7 mm and about 1.5 mm. In some embodiments, the writing tip may comprise a ball point comprising a ball rotably located within a writing orifice, wherein a gap between the writing orifice and the ball has a width of between about 5 µm to about 30 µm, more specifically between about 5 µm to about 25 µm and in particular between about 10 µm to about 25 µm. A gap between the writing orifice and the ball of these sizes may be beneficial for providing the required high laydown but without causing undue static or dynamic leakage during storage or after writing.

Additionally or alternatively, the writing instrument may be configured to dispense from 150 to 800 mg/100m, specifically from 200 to 700 mg/100m, more specifically from 250 to 600 mg/100m and in particular from 250 to 500 mg/100m. The determination of the laydown is not particularly limited and can be done as indicated in the below experimental section.

The present disclosure further relates to a method of writing by using the aqueous gel ink described above.

According to some embodiments said method comprises a step of writing on an absorbent (or absorbing) support. In some embodiments, the absorbing support is a porous substrate, specifically paper, notably cellulosic paper, cardboard, or a textile. More specifically, the absorbent support is paper. By *"porous substrate"* is meant a substrate that contains pores. The porous substrates have empty spaces or pores that allow external matter, like ink, to penetrate into the substrate.

According to alternative embodiments, the method of writing by using the aqueous gel comprises a step of writing on a synthetic paper. The term *"synthetic paper"* is well known in the art and i.a. (inter alia) attributed its common meaning in the art. Additionally or alternatively, the term *"synthetic paper"* may relate to a writing substrate comprising a synthetic polymer, in particular a polymer selected from polyolefins, polyesters, polyethers, polyketones, polyamides, polyvinyls and polystyrenes. The synthetic paper may be waterproof and/or water-resistant. The term *"waterproof'* is well-known and i.a. attributed its common meaning in the art. Additionally or alternatively, the term *"waterproof'* may refer to a material being impervious or substantially impervious to water. Determining whether the synthetic paper is waterproof in the above sense is not particularly limited and can be done by e.g. the following procedure: A piece of synthetic paper is folded to a cup-like shape and filled with water such that at least the bottom of the cup is covered with a layer of 10 mm of water. The synthetic paper is considered waterproof if the paper face opposite to the paper face forming the bottom of the cup remains dry for a time period of at least 3 minutes. Similarly, the term *"water-resistant"* is well-known and i.a. attributed its common meaning in the art. Additionally or alternatively, the term *"waterproof'* may refer to a material not being significantly damaged or damaged by contact with water. The synthetic paper may comprise for example a water-resistant polymer, e.g. a polymer that is insoluble in water and/or does not significantly swell in water. Further, the polymer may be substantially impervious to water.

Thus, according to some embodiments, the synthetic paper may be a synthetic polymer, more specifically a synthetic polymer selected from polyolefins, polyesters, polyethers, polyketones, polyamides, polyvinyls and polystyrenes.

### Examples:

### Example 1 (according to the invention):

### Preparation of an aqueous suspension of core-shell metal nanoparticles

A first mixture was prepared by mixing at ambient temperature (around 21°C), under stirring until dissolution of all raw materials, a total amount of 2686.4 g of distilled water, 4.6 g of silver nitrate (S7276 from Sigma Aldrich), 86 g of copper sulfate, pentahydrated (209198 from Sigma Aldrich), 13.4 g of polyvinyl pyrrolidone (PVP K30 from Sigma Aldrich), and 62.9 g of sodium hydroxide (from Alfa Aesar) so as to obtain a pH of 7.

In parallel, a second mixture was prepared by mixing at ambient temperature (around 21°C), under stirring until dissolution of all raw materials, a total amount of 1074.5 g of distilled water, 189.1 g of ascorbic acid (A92902 from Sigma Aldrich) and 161.2 g of sodium hydroxide (from Alfa Aesar) so as to obtain a pH of 7.

Then, the second mixture was added to the first mixture under stirring for a duration of 10 min at ambient temperature (around 21°C). The resulting mixture was then heated at 60°C and stirring was continued for 4 hours (after the temperature was stabilized at 60°C). The color of the solution was dark green. The pH of the aqueous suspension of the core-shell metal nanoparticles was measured at 5.

The total amount of components added is summarized below:

| **Material** | **Quantity** |
|---|---|
| Water (total) | 3760.9 g |
| Copper sulphate, penta hydrated | 86 g |
| Silver nitrate | 4.6 g |
| PVP K30 | 13.4 g |
| Sodium hydroxide in solution | 224.1 g |
| Ascorbic acid | 189.1 g |
| TOTAL | 4278.1 g |

It shall be noted that, according to the present example according to the invention, the weight ratio of metallic copper to metallic silver is 7.5.

### Concentration step of the metal nanoparticles by nanofiltration

The aqueous suspension of core-shell nanoparticles was subjected to nanofiltration using the filtration system VariMemTM Nano, obtainable from Pall Corporation. The nanoparticles were retained by a polysulfone membrane (SLP-1053: Polysulfone - 10 kDa). The concentration was carried out continuously, the pressure was fixed at 0.7 bar for a flow rate of 12 L/min. Using nanofiltration, the nanoparticles were fast and very efficiently concentrated to approximately 7 of the initial volume of the aqueous suspension without agglomeration. The concentrated aqueous suspension was dark green-black.

### Preparation of an aqueous gel ink of core-shell metal nanoparticles

In a beaker, 80 g of glycerin, 100 g of polyethylene glycol 200 and 1.9 g of Biocide Acticide MBS were mixed at 35°C, and 3.5 g of xanthan gum powder was added under strong mixing until a good powder dispersion is obtained. The obtained gel matrix was mixed with the concentrated aqueous suspension. The resulting ink was stirred for 3 hours. To summarize, the resulting ink had an overall composition as follows:

| **Component** | **Quantity** |
|---|---|
| Aqueous suspension (preparation described before) | 814.6 g |
| Glycerin | 80 g |
| Polyethylen glycol 200 | 100 g |
| Acticide MBS | 1.9 g |
| Xanthan Gum | 3.5 g |
| **TOTAL** | **1000 g** |

The obtained aqueous gel ink was black. The aqueous gel comprises about 2.48 weight% of core-shell metal nanoparticles.

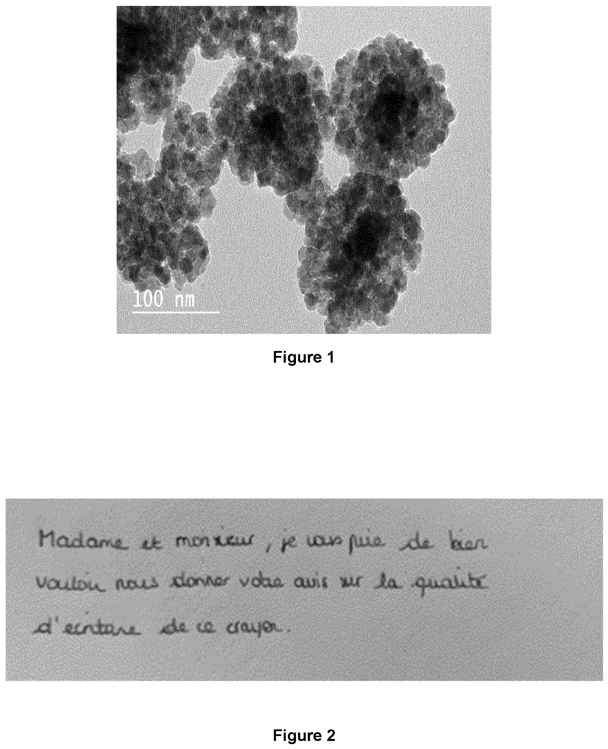

As illustrated in **Figure 1**, and as further confirmed by EDX analysis, core-shell nanoparticles were formed. EDX analysis also confirmed that in the obtained core-shell nanoparticles, the silver is located in the core of the core-shell nanoparticles while copper is located in the shell of the core-shell metal nanoparticles.

In addition, a spectrum of the core-shell nanoparticles of Example 1 exhibited a first peak at about 583 nm corresponding to metallic copper and a second peak at 463 nm corresponding to metallic silver. The metallic silver peak seemed less intense than the metallic copper peak. It is believed that this is because the silver is located in the core of the core-shell nanoparticles while copper is located in the shell of the metal nanoparticles.

The ink was filled into a Gelocity Illusion ink cartridge, sold by the company BIC S.A., France. The writing instrument had a gap between the writing ball and the writing orifice with a width of 20 µm. A written mark was made with the above writing instrument on a porous substrate (printed paper: Clairefontaine, clairalfa 80 g/m²).

As seen in **Figure 2****,** the obtained written mark exhibits a good intensity (or vividness) of the color.

### Example 2 (comparative example):

### Preparation of an aqueous suspension of metal nanoparticles

A first mixture was prepared by mixing at ambient temperature (around 21°C), under stirring until dissolution of all raw materials, a total amount of 2686.4 g of distilled water, 2.18 g of silver nitrate (S7276 from Sigma Aldrich), 8.55 g of copper sulfate, pentahydrated (209198 from Sigma Aldrich), 13.4 g of polyvinyl pyrrolidone (PVP K30 from Sigma Aldrich), and 62.9 g of sodium hydroxide (from Alfa Aesar) so as to obtain a pH of 7.

In parallel, a second mixture was prepared by mixing at ambient temperature (around 21°C), under stirring until dissolution of all raw materials, a total amount of 1074.5 g of distilled water, 189.1 g of ascorbic acid (A92902 from Sigma Aldrich) and 161.2 g of sodium hydroxide (from Alfa Aesar) so as to obtain a pH of 7.

Then, the second mixture was added to the first mixture under stirring for a duration of 10 min at ambient temperature (around 21 °C). The resulting mixture was then heated at 60°C and stirring was continued for 4 hours (after the temperature was stabilized at 60°C). The color of the solution was dark green. The pH of the aqueous suspension of the metal nanoparticles was measured at 5.

The total amount of components added is summarized below:

| **Material** | **Quantity** |
|---|---|
| Water (total) | 3760.9 g |
| Copper sulphate, penta hydrated | 8.55 g |
| Silver nitrate | 2.18 g |
| PVP K30 | 13.4 g |
| Sodium hydroxide in solution | 224.1 g |
| Ascorbic acid | 189.1 g |
| TOTAL | 4198.23 g |

It shall be noted that, according to the present comparative example, the weight ratio of metallic copper to metallic silver is 3.9.

### Concentration step of the metal nanoparticles by nanofiltration

The aqueous suspension of nanoparticles was subjected to nanofiltration using the filtration system VariMemTM Nano, obtainable from Pall Corporation. The nanoparticles were retained by a polysulfone membrane (SLP-1053: Polysulfone - 10 kDa). The concentration was carried out continuously, the pressure was fixed at 0.7 bar for a flow rate of 12 L/min. Using nanofiltration, the nanoparticles were fast and very efficiently concentrated to about approximately 7 of the initial volume of the aqueous suspension. The concentrated aqueous suspension was dark green-black.

### Preparation of an aqueous gel ink of metal nanoparticles

In a beaker, 80 g of glycerin, 100 g of polyethylene glycol 200 and 1.9 g of Biocide Acticide MBS were mixed at 35°C, and 3.5 g of xanthan gum powder was added under strong mixing until a good powder dispersion was obtained. The obtained gel matrix was mixed with the concentrated aqueous suspension. The resulting ink as stirred for 3 hours. To summarize, the resulting ink had an overall composition as follows:

| **Component** | **Quantity** |
|---|---|
| Aqueous suspension (preparation described before) | 814.6 g |
| Glycerin | 80 g |
| Polyethylen glycol 200 | 100 g |
| Acticide MBS | 1.9 g |
| Xanthan Gum | 3.5 g |
| **TOTAL** | **1000 g** |

The obtained aqueous gel ink was black.

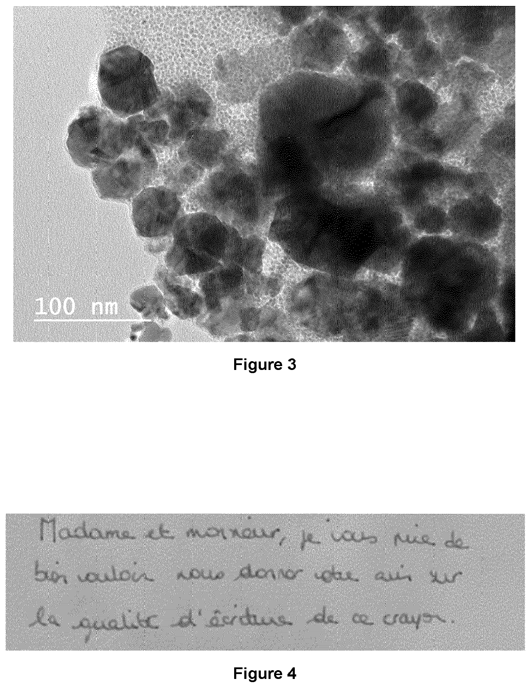

As illustrated in **Figure 3****,** core-shell nanoparticles were not formed when the weight ratio of metallic copper to metallic silver is lower than 4. This has been further confirmed by EDX analysis. In fact, in this case, as shown in **Figure 3****,** a mixture of copper nanoparticles and silver nanoparticles was formed.

The ink was filled into a Gelocity Illusion ink cartridge, sold by the company BIC S.A., France. The writing instrument had a gap between the writing ball and the writing orifice with a width of 20 µm. A written mark was made with the above writing instrument on a porous substrate (printed paper: Clairefontaine, clairalfa 80 g/m²). As seen in **Figure 4****,** the obtained written mark exhibits a lower color intensity and saturation compared to the written mark obtained with the ink according to the invention obtained in example 1.

### Example 3 (comparative example):

### Preparation of an aqueous suspension

A first mixture was prepared by mixing at ambient temperature (around 21°C), under stirring until dissolution of all raw materials, a total amount of 2846.6 g of distilled water, 4.6 g of silver nitrate (S7276 from Sigma Aldrich), 86 g of copper sulfate, pentahydrated (209198 from Sigma Aldrich), 13.4 g of polyvinyl pyrrolidone (PVP K30 from Sigma Aldrich).

In parallel, a second mixture was prepared by mixing at ambient temperature (around 21°C), under stirring until dissolution of all raw materials, a total amount of 1138.5 g of distilled water, and 189.1 g of ascorbic acid (A92902 from Sigma Aldrich).

Then, the second mixture was added to the first mixture under stirring for a duration of 10 min at ambient temperature (around 21°C). The resulting mixture was then heated at 60°C and stirring was continued for 4 hours (after the temperature was stabilized at 60°C). The color of the solution was dark green. The pH of the aqueous suspension of the metal nanoparticles was measured at 1.25.

The total amount of components added is summarized below:

| **Material** | **Quantity** |
|---|---|
| Water (total) | 3985 g |
| Copper sulphate, penta hydrated | 86 g |
| Silver nitrate | 4.6 g |
| PVP K30 | 13.4 g |
| Sodium hydroxide in solution | 0 g |
| Ascorbic acid | 189.1 g |
| TOTAL | 4278.1 g |

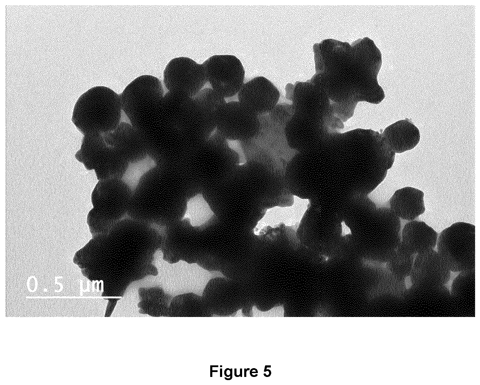

As illustrated in **Figure 5****,** core-shell nanoparticles were not formed when the reaction was carried out in the absence of NaOH. This was further confirmed by EDX analysis. In fact, in this case, as shown in **Figure 5****,** only nanoparticles comprising silver (and no copper) and nanoparticles comprising copper (and no silver) were formed. Further, it seems that the nanoparticles aggregated, and precipitated (a deposit was observed by naked eye).

### Embodiments:

Although the present invention is defined in the attached claims, it should be understood that the present invention can also (alternatively) be defined in accordance with the following embodiments:
1. A process for preparing an aqueous suspension of core-shell metal nanoparticles which essentially consist of metal, wherein the core of said nanoparticles comprises at least one of silver or copper and the shell of said nanoparticles comprises at least one of the other of silver or copper, wherein the metal nanoparticles are prepared by mixing:
   - at least one silver salt,
   - at least one copper salt,
   - a dispersing agent,
   - ascorbic acid,
   - an alkali base,
   - water,
   wherein the weight ratio of metallic copper to metallic silver is equal to or higher than 4, more preferably equal to or higher than 6.
2. The process according to embodiment 1, wherein the weight ratio of metallic copper to metallic silver is from 6 to 20, more specifically from 6 to 15 and in particular from 6 to 12.
3. The process according to embodiment 1 or 2, wherein the core of the metal nanoparticles comprises silver and the shell of the metal nanoparticles comprises copper.
4. The process according to any one of embodiments 1 to 3, wherein the core of the metal nanoparticles essentially consists or consists of silver and the shell of the metal nanoparticles essentially consists or consists of copper.
5. The process according to any one of embodiments 1 to 4, wherein the silver salt is chosen from AgNO₃, AgClO₄, Ag₂SO₄, AgCl, AgBr, AgOH, Ag₂O, AgBF₄, AglO₃, AgPF₆ and mixtures thereof, more specifically wherein the silver salt is silver nitrate AgNO₃.
6. The process according to any one of embodiment 1 to 5, wherein the copper salt is a copper (II) salt.
7. The process according to any one of embodiment 1 to 6, wherein the copper (II) salt is chosen from CuSO₄, CuCl₂, CuO, Cu(NO₃)₂, CuF₂, CuBr₂, CuCO₃, Cu(OAc)₂, Cu(ClO₃)₂, Cu(N₃)₂, Cu₂(CO₃)₂(OH)₂, Cu(OH)₂, and mixtures thereof, even more specifically wherein the copper salt is copper sulfate CuSO₄.
8. The process according to any one of embodiments 1 to 7, wherein the silver salt (more specifically the silver nitrate) is added at an amount from 0.01 to 2 weight%, more specifically from 0.05 to 1.5 weight%, more specifically from 0.05 to 1 weight%, and in particular from 0.05 to 0.5 weight%, based on the total weight of the aqueous suspension.
9. The process according to any one of embodiments 1 to 8, wherein the copper salt (more specifically the copper sulfate) is added at an amount from 0.5 to 15 weight%, more specifically from 1 to 10 weight%, more specifically from 1 to 5 weight%, and in particular from 1 to 4 weight%, based on the total weight of the aqueous suspension.
10. The process according to any one of embodiments 1 to 9, wherein the dispersing agent is present at an amount from 0.1 to 1.1 weight%, more specifically from 0.15 to 1.0 weight%, more specifically from 0.2 to 0.8 weight%, and in particular from 0.25 to 0.4 weight%, based on the total weight of the aqueous suspension.
11. The process according to any one of embodiments 1 to 10, wherein the dispersing agent comprises homopolymers or copolymers of vinylpyrrolidone, more specifically polyvinylpyrrolidone.
12. The process according to any one of embodiments 1 to 11, wherein the ascorbic acid is present at an amount from 1 to 10 weight%, more specifically from 2 to 8 weight%, and in particular from 3 to 7 weight%, based on the total weight of the aqueous suspension.
13. The process according to any one of embodiments 1 to 12, wherein the alkali base is chosen from metallic oxides and/or metallic hydroxides, more specifically chosen from Na₂O, K₂O, CS₂O, CaO, BaO, NaOH, KOH, CsOH, Ca(OH)₂, Ba(OH)₂, and mixtures thereof, and in particular the alkali base is sodium hydroxide NaOH.
14. The process according to any one of embodiments 1 to 13, wherein the alkali base is added at an amount from 0.5 to 30 weight%, more specifically from 1 to 20 weight%, and in particular from 2 to 10 weight %, based on the total weight of the aqueous suspension.
15. The process according to any one of embodiments 1 to 14, being carried out at a temperature from 0 to 100°C, more specifically from 5 to 80°C, more specifically from 20 to 80°C, more specifically from 50 to 68°C, more specifically from 53 to 65 °C, and even more specifically from 55 to 63°C.
16. The process according to any one of embodiments 1 to 15, comprising a step of preparing a first mixture comprising water, the silver salt and the copper salt, and then adding to that first mixture a second mixture comprising the ascorbic acid, more specifically wherein the pH of the first mixture has a pH of from 5 to 9 and more specifically from 6 to 8.
17. The process according to any one of embodiments 1 to 16, wherein the process comprises a step of:
   (i) preparing a first mixture comprising the silver salt, the copper salt, the dispersing agent, alkali base, and water,
   (ii) preparing a second mixture comprising the ascorbic acid, alkali base, and water, and
   (iii) mixing the first mixture with the second mixture to form the aqueous suspension.
18. The process according to embodiment 17, wherein the first mixture has a pH from 5 to 9, and more specifically from 6 to 8.
19. The process according to embodiment 17 or 18, wherein the second mixture has a pH from 5 to 9, and more specifically from 6 to 8.
20. The process according to any one of embodiments 17 to 19, wherein the step of mixing the first mixture with the second mixture is carried out by adding the second mixture to the first mixture, in particular under stirring, more specifically the step of mixing the first mixture with the second mixture is carried out for a duration of at least 10 min, and more specifically for a duration of at least 1 hour.
21. The process according to embodiments 17 to 20, wherein the step of mixing the first mixture with the second mixture is carried out at a temperature from 0 to 100°C, more specifically from 5 to 80°C, more specifically from 20 to 80°C, more specifically from 50 to 68°C, more specifically from 53 and 65 °C, and even more specifically from 55 to 63°C.
22. The process according to any one of embodiments 1 to 21, wherein the pH of the aqueous suspension is from 4 to 8, more specifically from 4.5 to 7, and in particular from 5 to 7.
23. The process according to any one of embodiments 1 to 22, is not carried out under inert atmosphere.
24. The process according to any one of embodiments 1 to 23, wherein the process does not comprise the addition of sodium borohydride NaBH₄, more specifically the process does not comprise the addition of sodium borohydride, and/or hydrazine, and/or lithium tetrahydruroaluminate.
25. The process according to any one of embodiments 1 to 24, wherein the process does not comprise a step of adding an additional coloring agent.
26. The process according to any one of embodiments 1 to 25, further comprising a step of adding a homopolymer or copolymer of vinyl alcohol.
27. The process according to any one of embodiment s 1 to 26, wherein the core-shell metal nanoparticles have an average particle size from 10 to 250 nm, specifically from 20 to 200 nm, and even more specifically from 40 to 170 nm.
28. A process for preparing an aqueous gel ink of core-shell metal nanoparticles, comprising the steps of:
   (i) preparing the aqueous suspension according to any one of embodiments 1 to 27,
   (ii) concentrating the aqueous suspension obtained in step (i) by centrifugation and/or filtration, and
   (ii) adding the concentrated aqueous suspension of nanoparticles obtained in step (ii) to a gel-based matrix for an aqueous ink, to obtain an aqueous gel ink.
29. The process according to embodiment 28, wherein the aqueous gel ink has a fixed color.
30. The process according to any one of embodiments 28 or 29, wherein the aqueous suspension is concentrated by nanofiltration, in particular wherein the aqueous suspension is retained by a porous polysulfone membrane.
31. The process according to any one of embodiments 28 to 30, wherein the gel-based matrix comprises one or more of a co-solvent, an antimicrobial agent, a corrosion inhibitor, an antifoam agent, and/or a rheology modifier.
32. An aqueous suspension comprising core-shell metal nanoparticles comprises a dispersing agent, ascorbic acid and/or its residuals and an alkali metal salt, wherein said nanoparticles essentially consist of metal, wherein the core of said nanoparticles comprises silver and the shell of said nanoparticles comprises copper, and wherein the weight ratio of metallic copper to metallic silver is equal to or higher than 4.
33. The aqueous suspension according to embodiment 32, wherein the core of the metal nanoparticles consists or essentially consists of silver and the shell of the metal nanoparticles consists or essentially consists of copper.
34. The aqueous suspension according to embodiment 32 or 33, exhibiting a plasmonic effect.
35. The aqueous suspension according to any one of embodiments 32 to 34, wherein the metal nanoparticles are the only coloring agent.
36. The aqueous suspension according to any one of embodiments 32 to 35, wherein the nanoparticles are present at an amount of 0.11 to 2.0 weight%, more specifically from 0.22 to 1.1 weight%, and in particular from 0.23 to 0.88 weight%, based on the total weight of the aqueous suspension.
37. The aqueous suspension according to any one of embodiments 32 to 36, comprising from 0.1 to 1.5 weight%, more specifically from 0.2 to 1 weight%, and in particular from 0.2 to 0.8 weight% of copper based on the total weight of the aqueous suspension.
38. The aqueous suspension according to any one of embodiments 32 to 37, comprising from 0.01 to 0.5 weight%, more specifically from 0.02 to 0.1 weight%, and in particular from 0.03 to 0.08 weight% of silver, based on the total weight of the aqueous suspension.
39. The aqueous suspension according to any one of embodiments 32 to 38, wherein the dispersing agent is present at an amount of 0.1 to 1.1 weight%, based on the total weight of the aqueous suspension.
40. The aqueous suspension according to any one of embodiments 32 to 39, wherein the dispersing agent comprises homopolymers or copolymers of vinylpyrrolidone, more specifically polyvinylpyrrolidone.
41. The aqueous suspension according to any one of embodiments 32 to 40, wherein the ascorbic acid and/or its residuals is present at an amount of 0.00000002 to 0.2 weight%, based on the total weight of the aqueous suspension.
42. The aqueous suspension according to any one of embodiments 32 to 41, wherein the alkali metal salt is chosen from a sodium salt, a potassium salt, a calcium salt, a barium salt, a cesium salt, and mixtures thereof, and in particular the alkali metal salt is a sodium salt.
43. The aqueous suspension according to any one of embodiments 32 to 42, wherein the alkali metal salt is present at an amount of 0.00000002 to 0.2 weight%, in particular from 0.00000002 to 0.1 weight%, based on the total weight of the aqueous suspension.
44. The aqueous suspension according to any one of embodiments 32 to 43, wherein the aqueous suspension comprises water at an amount of 50 to 95 weight%, more specifically from 70 to 90 weight%, and in particular from 75 to 90 weight%, based on the total weight of the aqueous gel ink.
45. The aqueous suspension according to any one of embodiments 32 to 44, wherein the pH of the aqueous suspension is from 4 and 8, more specifically from 4.5 to 7, and in particular from 5 to 7.
46. The aqueous suspension to any one of embodiments 32 to 45, wherein the core-shell metal nanoparticles have an average particle size from 10 to 250 nm, specifically from 20 to 200 nm, and even more specifically from 40 to 170 nm.
47. The aqueous suspension according to any one of embodiments 32 to 46, further comprising a homopolymer or copolymer of vinyl alcohol.
48. The aqueous suspension according to any one of embodiments 32 to 47, obtained by the process according to any one of embodiments 1 to 31.
49. An aqueous gel ink, comprising core-shell metal nanoparticles which essentially consist of metal, a dispersing agent, ascorbic acid and/or its residuals and an alkali metal salt, wherein the core of the metal nanoparticles comprises silver and the shell of said metal nanoparticles comprises copper and wherein the weight ratio of metallic copper to metallic silver is equal to or higher than 4.
50. The aqueous gel ink according to embodiment 49, exhibiting a plasmonic effect.
51. The aqueous gel ink according to embodiment 49 or 50, wherein the metal nanoparticles are the only coloring agent.
52. The aqueous gel ink according to any one of embodiments 49 to 51, has a fixed color.
53. The aqueous gel ink according to any one of embodiments 49 to 52, wherein the core of the metal nanoparticles consists or essentially consists of silver and the shell of the metal nanoparticles consists or essentially consists of copper.
54. The aqueous gel ink according to any one of embodiments 49 to 53, wherein the core-shell metal nanoparticles are present at an amount of 0.11 to 11 weight%, more specifically from 0.55 to 8.5 weight%, and in particular from 1.1 to 5.5 weight%, based on the total weight of the aqueous gel ink.
55. The aqueous gel ink according to any one of embodiments 49 to 54, comprising from 0.01 to 1 weight%, more specifically from 0.05 to 0.5 weight%, and in particular from 0.1 to 0.5 weight% of silver, based on the total weight of the aqueous gel ink.
56. The aqueous gel ink according to any one of embodiments 49 to 55, comprising from 0.1 to 10 weight%, more specifically from 0.5 to 8 weight%, and in particular from 1 to 5 weight% of copper, based on the total weight of the gel ink.
57. The aqueous gel ink according to any one of embodiments 49 to 56, wherein the dispersing agent is present at an amount of 0.01 to 1.5 weight%, more specifically from 0.01 to 1.5 weight%, more specifically from 0.2 to 1.5 weight%, and in particular from 0.5 to 1.5 weight%, based on the total weight of the aqueous gel ink.
58. The aqueous gel ink according to any one of embodiments 49 to 57, wherein the dispersing agent comprises homopolymers or copolymers of vinylpyrrolidone, more specifically polyvinylpyrrolidone.
59. The aqueous gel ink according to any one of embodiments 49 to 58, wherein the ascorbic acid and/or its residuals is present at an amount of 0.0000001 to 0.5 weight%, based on the total weight of the aqueous gel ink.
60. The aqueous gel ink according to any one of embodiments 49 to 59, wherein the alkali metal salt is present at an amount of 0.0000001 to 0.5 weight%, in particular from 0.0000002 to 0.1 weight%, based on the total weight of the aqueous gel ink.
61. The aqueous gel ink according to any one of embodiments 49 to 60, wherein the alkali metal salt is chosen from a sodium salt, a potassium salt, a calcium salt, a barium salt, a cesium salt, and mixtures thereof, and in particular the alkali metal salt is a sodium salt.
62. The aqueous gel ink according to any one of embodiments 49 to 61, wherein the aqueous gel ink comprises water at an amount of 25 to 80 weight%, more specifically from 30 to 70 weight%, and in particular from 30 to 60 weight%, based on the total weight of the aqueous gel ink.
63. The aqueous gel ink according to any one of embodiments 49 to 62, wherein the core-shell metal nanoparticles have an average particle size from 10 to 250 nm, specifically from 20 to 200 nm, and even more specifically from 40 to 170 nm.
64. The aqueous gel ink according to any one of embodiments 49 to 63, further comprising a homopolymer or copolymer of vinyl alcohol.
65. The aqueous gel ink according to any one of embodiments 49 to 64, wherein the aqueous gel ink further comprises one or more of a co-solvent, an antimicrobial agent, a corrosion inhibitor, an antifoam agent, and/or a rheology modifier.
66. The aqueous gel ink according to any one of embodiments 49 to 65, further comprising:
   - a co-solvent, more specifically at an amount ranging from 5 to 35 weight%, relative to the total weight of the aqueous gel ink; and/or
   - an antimicrobial agent, more specifically at an amount ranging from 0.01 to 0.5 weight%, relative to the total weight of the aqueous gel ink; and/or
   - a corrosion inhibitor, more specifically at an amount ranging from 0.05 to 1 weight%, relative to the total weight of the aqueous gel ink; and/or
   - an antifoam agent, more specifically at an amount ranging from 0.05 to 1weight%, relative to the total weight of the aqueous gel ink; and/or
   - a rheology modifier, specifically at an amount ranging from 0.08 to 2weight%; relative to the total weight of the aqueous gel ink.
67. The aqueous gel ink according to any one of embodiments 49 to 66, obtained by the process according to any one of embodiments 28 to 31.
68. A writing instrument comprising:
   - an axial barrel containing an aqueous gel ink according to embodiments 49 to 67, and
   - a pen body which delivers the aqueous gel ink stored in the axial barrel, more specifically wherein the writing instrument is chosen in the group consisting of gel pens, felt pens, and even more specifically gel pens.
69. A writing instrument according to embodiment 68, configured to dispense from 150 to 800 mg/100m, specifically from 200 to 700 mg/100m, more specifically from 250 to 600 mg/100m and in particular from 250 to 500 mg/100m.
70.A method of writing with an aqueous gel ink comprising the step of writing on an absorbing support, specifically paper, notably cellulosic paper, cardboard or textile, more specifically paper, with an aqueous gel ink according to any one of embodiments 49 to 67.
71.A method of writing with an aqueous gel ink comprising the step of writing on a synthetic paper, specifically a synthetic polymer, more specifically wherein the synthetic polymer is selected from polyolefins, polyesters, polyethers, polyketones, polyamides, polyvinyls and polystyrenes, with an aqueous gel ink according to any one of embodiments 49 to 67.

## Claims

1. A process for preparing an aqueous suspension of core-shell metal nanoparticles which essentially consist of metal, wherein the core of said nanoparticles comprises at least one of silver or copper and the shell of said nanoparticles comprises at least one of the other of silver or copper, wherein the metal nanoparticles are prepared by mixing:
- at least one silver salt, more specifically wherein the silver salt is silver nitrate AgNO₃,
- at least one copper salt, more specifically wherein the copper salt is copper sulfate CuSO₄,
- a dispersing agent, more specifically wherein the dispersing agent comprises homopolymers or copolymers of vinylpyrrolidone, even more specifically polyvinylpyrrolidone,
- ascorbic acid,
- an alkali base,
- water,
wherein the weight ratio of metallic copper to metallic silver is equal to or higher than 4, more preferably equal to or higher than 6.

2. The process according to claim 1, wherein the weight ratio of metallic copper to metallic silver is from 6 to 20, more specifically from 6 to 15 and in particular from 6 to 12.

3. The process according to claim 1 or 2, wherein the core of the metal nanoparticles comprises silver and the shell of the metal nanoparticles comprises copper and/or wherein the core of the metal nanoparticles essentially consists or consists of silver and the shell of the metal nanoparticles essentially consists or consists of copper.

4. The process according to any one of claims 1 to 3, wherein the silver salt is added at an amount from 0.01 to 2 weight%, more specifically from 0.05 to 1.5 weight%, more specifically from 0.05 to 1 weight%, and in particular from 0.05 to 0.5 weight%, based on the total weight of the aqueous suspension,
and/or
wherein the copper salt is added at an amount from 0.5 to 15 weight%, more specifically from 1 to 10 weight%, more specifically from 1 to 5 weight%, and in particular from 1 to 4 weight%, based on the total weight of the aqueous suspension.

5. The process according to any one of claims 1 to 4, wherein the ascorbic acid is present at an amount from 1 to 10 weight%, more specifically from 2 to 8 weight%, and in particular from 3 to 7 weight%, based on the total weight of the aqueous suspension.

6. The process according to any one of claims 1 to 5, wherein the alkali base is chosen from metallic oxides and/or metallic hydroxides, more specifically chosen from Na₂O, K₂O, CS₂O, CaO, BaO, NaOH, KOH, CsOH, Ca(OH)₂, Ba(OH)₂, and mixtures thereof, and in particular the alkali base is sodium hydroxide NaOH, and/or
wherein the alkali base is added at an amount from 0.5 to 30 weight%, more specifically from 1 to 20 weight%, and in particular from 2 to 10 weight %, based on the total weight of the aqueous suspension.

7. The process according to any one of claims 1 to 6, wherein the process comprises a step of:
(i) preparing a first mixture comprising the silver salt, the copper salt, the dispersing agent, alkali base, and water,
(ii) preparing a second mixture comprising the ascorbic acid, alkali base, and water, and
(iii) mixing the first mixture with the second mixture to form the aqueous suspension.

8. A process for preparing an aqueous gel ink of core-shell metal nanoparticles, comprising the steps of:
(i) preparing the aqueous suspension according to any one of claims 1 to 7,
(ii) concentrating the aqueous suspension obtained in step (i) by centrifugation and/or filtration, and
(iii) adding the concentrated aqueous suspension of nanoparticles obtained in step (ii) to a gel-based matrix for an aqueous ink, to obtain an aqueous gel ink.

9. An aqueous suspension comprising core-shell metal nanoparticles comprises a dispersing agent, more specifically polyvinylpyrrolidone, ascorbic acid and/or its residuals and an alkali metal salt, wherein said nanoparticles essentially consist of metal, wherein the core of said nanoparticles comprises silver and the shell of said nanoparticles comprises copper, and wherein the weight ratio of metallic copper to metallic silver is equal to or higher than 4.

10. The aqueous suspension according to claim 9, wherein the core of the metal nanoparticles consists or essentially consists of silver and the shell of the metal nanoparticles consists or essentially consists of copper.

11. The aqueous suspension according to claim 9 or 10, exhibiting a plasmonic effect and/or wherein the metal nanoparticles are the only coloring agent.

12. The aqueous suspension according to any one of claims 9 to 11, obtained by the process according to any one of claims 1 to 7.

13. An aqueous gel ink, comprising core-shell metal nanoparticles which essentially consist of metal, a dispersing agent, more specifically polyvinylpyrrolidone, ascorbic acid and/or its residuals and an alkali metal salt, wherein the core of the metal nanoparticles comprises silver and the shell of said metal nanoparticles comprises copper and wherein the weight ratio of metallic copper to metallic silver is equal to or higher than 4.

14. The aqueous gel ink according to claim 13, exhibiting a plasmonic effect, and/or wherein the metal nanoparticles are the only coloring agent, and/or wherein the core of the metal nanoparticles consists or essentially consists of silver and the shell of the metal nanoparticles consists or essentially consists of copper.

15. A writing instrument comprising:
- an axial barrel containing an aqueous gel ink according to claim 13 or 14, and
- a pen body which delivers the aqueous gel ink stored in the axial barrel,
more specifically wherein the writing instrument is chosen in the group consisting of gel pens, felt pens, and even more specifically gel pens.
